# EUROPÄISCHE PATENTANMELDUNG

(11) **EP 0 768 153 A1**
(43) Veröffentlichungstag der Anmeldung: **16.04.1997**
(21) Anmeldenummer: 96115716.1
(22) Anmeldetag: 01.10.1996
(51) Int. Cl.: B26D 7/08, B26D 1/10

(54) **Ultraschallerregtes Schneidesystem, insbesondere zum Schneiden von Lebensmitteln**

(30) Priorität: 11.10.1995 DE 19537826
(71) Anmelder: Dr. Wolf und Partner Ingenieurbüro für Lebensmitteltechnik GmbH, 06116 Halle (DE); Ultraschalltechnik Halle GmbH, 06118 Halle (DE)
(72) Erfinder: Wolf, Karlheinz, Dr., 06128 Halle (DE); Grosse, Hartmut, 06193 Nauendorf/Saalkreis (DE); Gebhardt, Lothar, 06132 Halle (DE); Roth, CHristian, 06128 Halle (DE); Schröder, Hans, 06120 Halle (DE); Schröter, Thomas, 06128 Halle (DE)
(74) Vertreter: Leinung, Günter

(57) **Zusammenfassung**

Die Erfindung betrifft ein ultraschallerregtes Schneidsystem mit schwingender Schneidklinge, insbesondere zum Schneiden von Lebensmitteln.

Es wurde ein ultraschallerregtes Schneidsystem entwickelt, welches zusätzlich mit einer mechanisch erzeugten Translationsbewegung überlagert ist und das somit doppelt wirkende Schneidsystem sich durch eine langhubige gesteuerte Oszillation einer Messerklinge mit einem gesteuerten Ultraschallerreger für das Werkzeug auszeichnet.

Das Schneidwerkzeug, ein langausgebildetes Messer 5, ist beidseitig über entsprechende Befestigungselemente 6 an einem Bügel 3 befestigt. Der Bügel 3 selbst ist in entsprechenden Lagerungen 4 gelagert, dem auf der einen Seite ein Längsantrieb 7 sowie eine Kupplung 2 zugeordnet sind und welcher auf der gegenüberliegenden Seite mit einer Spannvorrichtung 10 ausgeführt ist. Gleichfalls am Bügel 3 sind, im Bereich der Einspannung des Messers 5, je ein Ultraschallwandler 1 angeordnet, die aus jeweils Piezokeramiken mit den dazugehörigen auf die halbe Wellenlänge der Ultraschallfrequenz abgestimmten Endmassen bestehen.

## Beschreibung

Die Erfindung betrifft ein ultraschallerregtes Schneidsystem mit schwingender Schneidklinge, insbesondere zum Schneiden von Lebensmitteln, nach dem Oberbegriff des Anspruches 1.

Aus dem Stand der Technik ist allgemein bekannt, daß Schneidklingen oder auch anders ausgebildete Schneidwerkzeuge mittels Ultraschall erregt werden und zum Schneiden bzw. zur Bearbeitung verschiedener Werkstoffe und Materialien eingesetzt werden.

So wird in der DE 4210928 C2 ein Honwerkzeug vorgestellt, welches mit Ultraschall beaufschlagt wird, bei dem das Honwerkzeug mit einer freien Länge ausgebildet ist, die in Abhängigkeit der Ultraschallschwingungen in ihrer Länge fixiert und mit einem Schneidmittelbelag versehen ist, wobei dieses Honwerkzeug sowohl für die Oberflächenbearbeitung als auch für Formkorrekturen von Bohrungen eingesetzt wird, um verbesserte Formkorrekturen zu erreichen bzw. höhere Abtragsleistungen zu ermöglichen.

Die in den DE 3626426 A1 und DE 3920671 C2 vorgeschlagenen Lösungen beziehen sich auf Schneidvorrichtungen, die auf der Grundlage der Ultraschall - Vibration arbeiten, die zur Bearbeitung von Pappe und Glas eingesetzt werden.

Bei den bereits bekannten Schneidvorrichtungen sind die Schneiden so angeordnet, daß sie in der Vibrationsachse des Ultraschallwandlers liegen und entsprechend erregt werden. Die in die Schneidklingen eingeleiteten Schallwellen weisen dabei Wellenknoten und -bäuche auf, wobei im Bereich der Wellenbäuche es infolge von Kompressions- und Dehnungsvorgängen zu sehr kleinen Bewegungen an der Schneide kommt, die den Schneidvorgang unterstützen. Da diese Bewegung nur im Bereich der Wellenbäuche den Schneidvorgang unterstützen, muß zum Schneiden dickerer Materialien eine mehr oder weniger lange Schneide mit einer langhubigen Hin- und Herbewegung gekoppelt werden. Es wird auf die Patentschrift 3437908 verwiesen.

Eine weitere Möglichkeit wird in der EP 0584670 A1 beschrieben.
Hier werden mehrere Klingen von einem Ultraschallwandler über ein Ultraschallhorn quer zur Vibrationsachse zum Schwingen gebracht.

Schließlich sei noch auf die DE 2625636 A1 verwiesen, welche sich aufein Verfahren zum spanlosen Schneiden fester Werkstoffe bezieht und zum Schneiden ein Schneidelement Anwendung findet, welches im Ultraschallbereich angeregt werden soll.

Es wird ausgeführt, daß sich eine langsam laufende und stehende Welle ausbilden soll, wie die Welle entsteht und wodurch ein Schneideffekt gesichert werden soll, wird nicht offenbart. Technische Merkmale zur Realisierung sind nicht dargelegt, so daß sich auch keine technische Lehre zum Handeln ableiten läßt.

Den bekannten Lösungen haften die Nachteile an, daß sich in dem Schneidelement eine stehende Welle ausbildet, die keinen qualitätsgerechten Schnitt ermöglicht und zum anderen sind die längenmäßige Ausführungen der Klingen bzw. der Schneidwerkzeuge sehr begrenzt, deren Maße in den bekannten Veröffentlichungen mit 120 mm Länge angegeben werden und somit zum Schneiden dicker Materialien, z. B. zum Schneiden großstückigen Fleisches und großer Käselaibe ungeeignet sind.

Aufgabe der Erfindung ist es, ein ultraschallerregtes Schneidsystem, insbesondere zum Schneiden von Lebensmitteln, zu entwickeln, welches den Einsatz langer Schneidklingen/Schneidwerkzeuge ermöglicht und die aufgezeichneten Nachteile ausschließt, mit einer elektronischen Steuerung ausgerüstet ist, die unmittelbar technologischen Parametern folgend, auf das System Einfluß nimmt und eine optimale Schneidqualität sichert.

Erfindungsgemäß wird die Aufgabe durch die im Anspruch 1 gekennzeichneten Merkmale gelöst.

Besondere Ausführungen und vorteilhafte Ausgestaltungen sind Gegenstand von Unteransprüchen.

Es wurde ein ultraschallerregtes Schneidsystem entwickelt, welches zusätzlich mit einer mechanisch erzeugten Translationsbewegung überlagert ist und das somit doppelt wirkende Schneidsystem sich durch eine langhubige gesteuerte Oszillation einer Messerklinge mit einem gesteuerten Ultraschallerreger für das Werkzeug ausgezeichnet.

Es ist ein Hochgeschwindigkeitsschneid- Schneidsystem entwickelt worden, welches eine Klingenbewegung von 5 Hz bis 50 Hz und eine Amplitude von 10 mm bis 30 mm ermöglicht und bei dem zusätzlich ein Ultraschall-Mikroschneidprozeß im Produkt wirkt.

Bei dem neuentwickeltem Schneidsystem wurde berücksichtigt, daß im Bereich der üblichen Ultraschallfrequenzen von 20 kHz bis 50 kHz und bei den für Schneidklingen verwendeten Werkstoffen der Abstand der erzeugten Wellenbäuche und damit der Abstand zur Amplitudenmaxima zwischen etwa 15 cm und 6 cm liegt, was andererseits bedeutet, daß nur im Bereich des Maximums eine bedeutende Unterstützung des Schneidens stattfindet, daß zum Schneiden dickerer Materialien das Messer bzw. die Schneidklinge mit einer langhubigen Bewegung in der Größe der Dicke des zu schneidenden Materials höchstens aber mit der halben Wellenlänge der Ultraschallwellen bewegt werden muß.

Bei dem erfindungsgemäßen ultraschallerregtem Schneidsystem ist das Schneidwerkzeug als ein langes Messer mit einer bevorzugten Länge von etwa 300 mm bis 500 mm ausgeführt, welches quer zur Vibrationsachse der Ultraschallwandler angeordnet und an beiden Enden durch entsprechende Verbindungselemente befestigt ist. Beidseitig am jeweiligen Ende des Messers sind je ein Ultraschallwandler angeordnet, welche aus jeweils zwei Piezokeramiken mit den dazugehörigen auf die halbe Wellenlänge der Erregerfrequenz abgestimmten Endmassen bestehen.
Einseitig ist über eine zentrale Verbindung ein Amplitudenverstärker vorgesehen, dessen Verstärkung durch seine geometrische Form bestimmt wird.

Die beiden Ultraschallwandler werden von einem Generator mit der gleichen Amplitude und der gleichen Frequenz angesteuert, wobei die Möglichkeit besteht, die Phasenlage der Ansteuerspannungen der Ultraschallwandler zu variieren.

Durch die zweiseitige Einspeisung der Ultraschallschwingungen sowie der Schallwellenreflektion an den Messerenden, kommt es zur mehrfachen Überlagerung der Wellen. Damit wird erreicht, daß es nicht mehr nur Wellenbäuche im Abstand der halben Wellenlänge der Ultraschallwellen gibt. Es bilden sich Wellenbäuche über die gesamte Länge des Messers aus, so daß die gesamte Schneide durch Ultraschall aktiviert wird.

Gleichzeitig entstehen Schwingungen, die quer zur Wirkungslinie der Schneide wirken und somit einen Freischnitt-Effekt erzielen.

Mit nachfolgendem Ausführungsbeispiel soll die Erfindung näher erläutert werden. Die dazugehörige Zeichnung zeigt in:
- Fig. 1:: eine schematische Gesamtdarstellung des neuen Schneidsystems
- Fig. 2:: die Zuordnung der Ultraschallwandler zum Messer mit Amplitudenverlauf
- Fig. 3 :: eine Teilansicht nach Figur 3
- Fig. 4:: eine Schnittdarstellung A-A nach Figur 3

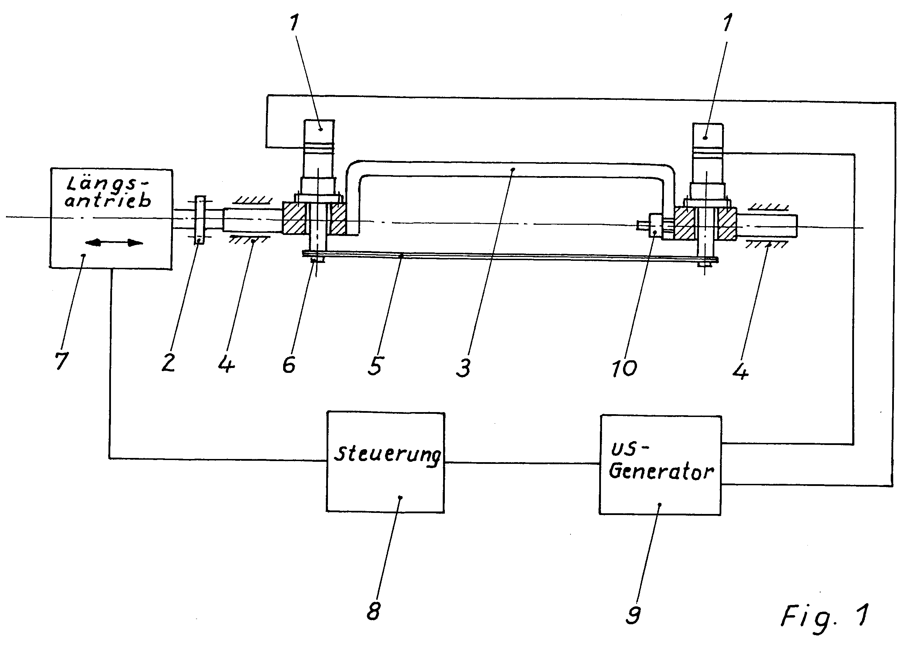

Das Wesen der Erfindung wird in der prinziphaften Darstellung des gesamten Schneidsystems aus der Figur 1 ersichtlich.
Das Schneidwerkzeug, ein lang ausgebildetes Messer 5, ist beidseitig über entsprechende Befestigungselemente 6 an einem Bügel 3 befestigt.

Der Bügel 3 selbst ist in entsprechenden Lagerungen 4 gelagert, dem aufder einen Seite ein Längsantrieb 7 sowie eine Kupplung 2 zugeordnet sind und welche auf der gegenüberliegenden Seite mit einer Spannvorrichtung 10 ausgeführt ist.

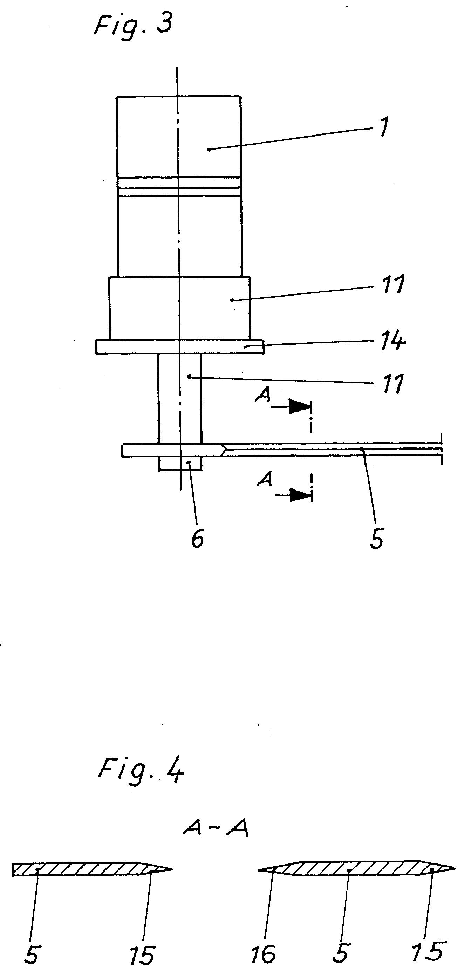

Gleichfalls am Bügel 3 sind, im Bereich der Einspannung des Messers 5, je ein Ultraschallwandler 1 angeordnet, die aus jeweils Piezokeramiken mit den dazugehörigen auf die halbe Wellenlänge der Ultraschallfrequenz abgestimmten Endmassen bestehen. Den Ultraschallwandlern 1 sind über eine zentrale Verbindung je ein Amplitudenverstärker 11 zugeordnet, dessen Verstärkung durch seine geometrische Form bestimmt ist und, wie in Figur 3 gezeigt, als ein abgesetzter Zylinder 11 ausgeführt ist.

In der Figur 1 ist weiterhin eine Steuerung 8 dargestellt, die einerseits über einen Ultraschallgenerator 9 mit den beiden Ultraschallwandlern 1 und andererseits mit dem Längsantrieb 7 verbunden ist.

Bei dem eingesetzten Messer 5 handelt es sich um ein Schneidwerkzeug mit einer bevorzugten Länge von 300 mm bis 500 mm, welches quer zur Vibrationsachse der Ultraschallwandler 1 gelagert und über Befestigungselemente 6 derart verbunden ist, daß die Ultraschallwellen von den Ultraschallwandlern 1 in das Messer 5 geleitet werden können.
Die vorgesehene Spannvorrichtung 10 am Bügel 3 sichert, daß das Messer 5 zwischen den beiden Ultraschallwandlern 1 straff gespannt werden kann.
Über einen Ultraschallgenerator 9 erfolgt die Ansteuerung der beiden Ultraschallwandler 1, wobei beide Ultraschallwandler 1 mit der gleichen Amplitude und der gleichen Frequenz beaufschlagt werden. Es besteht auch die Möglichkeit, die Phasenlage der Ansteuerspannungen der Ultraschallwandler 1 zueinander zu variieren.

Mit dem Schneidsystem wurde ein Antrieb geschaffen, der vorzugsweise Schneidvorgänge für Rohstoffe der Lebensmittelbranche im Hochgeschwindigkeitsbereich realisiert und in der Lage ist, mittels seiner vorgesehenen elektronischen Steuerung 8 die technischen Parameter des Antriebes während des Schneidvorganges auf den Rohstoff einzustellen.

Dabei sind wesentliche technische Parameter die Schnittgeschwindigkeit in Abhängigkeit von der Amplitude der durch die Ultraschallwandler erzeugten Schwingungen, der Frequenz und des Hubes der Längsbewegung. Weiterhin kann die Schnittkraft durch den Vorschub geregelt werden.
In Verbindung mit dem Vorschub des Schneidgutes wird unmittelbar auf die technologischen Parameter des zu schneidenden Rohstoffes, wie Dichte, Viskosität, Strukturaufbau und Temperatur, eingewirkt.

Der Steuerung 8 kommt gleichfalls die Aufgabe zu, den unmittelbaren Schneidprozeß nach optimalen Bedingungen ablaufen zu lassen, wobei die drei Hauptphasen eines jeden Schneidprozesses
1. Eindringen des Schneidwerkzeuges in das Schneidgut,
2. das Durchschneiden,
3. der Austritt
derart beeinflußt werden, daß in der ersten Phase eine geringe Vorschubkraft bei hoher Schnittgeschwindigkeit wirkt, während in der zweiten Phase die Vorschubkraft und die Schnittgeschwindigkeit gleichmäßig gestaltet werden, während in der dritten Phase die Vorschubkraft verringert und die Schnittgeschwindigkeit verzögert wird.

Dabei wird das Messer 5 mittels der Ultraschallwandler 1 in hochfrequente Schwingungen versetzt, die partiell in der Klinge wirksam sind, wobei das schwingende System zusätzlich über den Längsbetrieb 7 mit einer Translationsbewegung überlagert wird, was wiederum eine wesentliche Erhöhung der Messergeschwindigkeit gegenüber dem Schneidgut bewirkt.

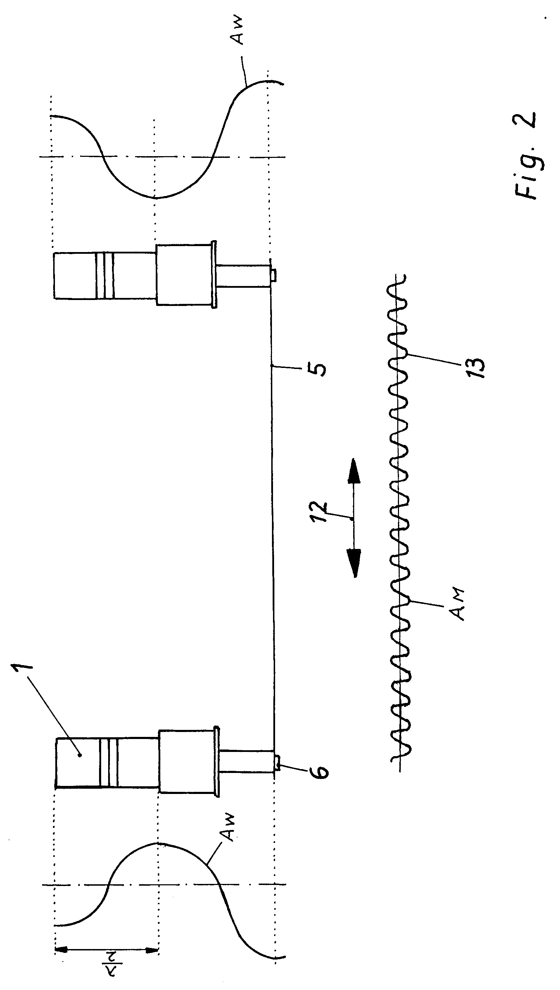

Die Figur 2 zeigt eine prinziphafte Anordnung und das funktionelle Zusammenwirken des Messers 5 mit den Ultraschallwandlern 1 und den zwischen den Ultraschallwandlern 1 und dem Messer 5 vorgesehenen Amplitudenverstärkern 11.
Die Pfeilrichtung 12 verdeutlicht die oszillierende Längsbewegung der gesamten Schneideinrichtung, während die dargestellten Amplitudenkurven 13 den Schwingungsverlauf in dem Messer 5 verdeutlichen.
Es wird sichtbar, daß durch die beidseitig eingeleiteten Schwingungen in Abhängigkeit der Geometrie und der Materialeigenschaften in dem Messer 5 Schwingungen entstehen, deren Wellenlänge wesentlich geringer ist als die Wellenlänge der anregenden Ultraschallschwingung.

Die unmittelbar konstruktive Ausgestaltung der Ultraschallwandler 1 im Zusammenhang mit den Amplitudenverstärker 11 und deren Möglichkeit des Anschlusses an den Bügel 3 sowie die Verbindung zum Messer 5, sind in der Figur 3 dargestellt.

In diesem Ausführungsbeispiel wird gezeigt, daß unmittelbar am Ultraschallwandler 1 jeweils ein Amplitudenverstärker 11 befestigt ist, dessen Verstärkung durch seine geometrische Form bestimmt ist, welche im vorliegenden Beispiel als ein abgesetzter Zylinder dargestellt ist. Dieser abgesetzte Zylinder hat an der Stelle der Querschnittsverjüngung einen Bund 14, an dem der jeweilige Ultraschallwandler 1 mit dem Amplitudenverstärker 11 am Bügel 3 befestigt ist.

Dabei ist wesentlich, daß die Lage des Bundes 14 so gewählt ist, daß an dieser Stelle ein Nulldurchgang der Schwingungen zu verzeichnen ist, und so keine Schwingungen auf den Bügel 3 übertragen werden.

Eine vorteilhafte Ausbildung des Messers 5 ergibt sich aus der Figur 4, in der eine Querschnittsform des Messers 5 gezeigt ist, wobei das Messer 5 mit einer oder zwei sich verjüngenden Schneiden 15 und 16 ausgebildet ist.

Diese schmale Ausbildung des Messers 5 bedingt eine wesentlich geringere Oberfläche gegenüber herkömmlicher Scheibenmessern, was den Vorteil bringt, daß sich diese Messer einfacher reinigen lassen, Schmiereffekte beim Schneidvorgang verringert werden, die Reibung und Materialerwärmung verringert wird, was wiederum eine geringere Keimbelastung der Schneidgutoberflächen garantiert.
Durch das schwingende Messer entsteht ein Selbstreinigungseffekt.

Das vorgeschlagene neue Schneidsystem bezieht sich auf ein oszillierendes geradlinig arbeitendes Schneidsystem zum Trennen von vorzugsweise Lebensmitteln, welches aber auch zum Schneiden und Trennen anderer Produkte eingesetzt werden kann. Insbesondere beim Trennen von Lebensmitteln, wie Fleisch- und Wurstwaren sowie Gemüsen, Käsen und Backwaren in frischer oder veredelten Form sichert die neue Lösung eine exakte Schneidqualität, den hohen Hygieneanforderungen wird entsprochen und durch das doppelt wirkende Schneidsystem, gekennzeichnet durch eine langhubig gesteuerte Zugbewegung des Messers 5 mit gesteuerten Ultraschallerregern 1, ist ein Hochgeschwindigkeits-Schneidsystem geschaffen worden, welches eine Messerbewegung von 5 Hz bis 500 Hz und eine Amplitude von 10 mm bis 30 mm ermöglicht und zusätzlich einen Ultraschall-Mikroschneidprozeß im zu verarbeitenden Produkt bewirkt.

## Patentansprüche

1. Ultraschallerregtes Schneidsystem, mit schwingender Schneidklinge, insbesondere zum Schneiden von Lebensmitteln, bei denen die Ultraschallerregung mit einer mechanischen Bewegung überlagert wird, ein länglich ausgebildetes Schneidwerkzeug in einem Bügel eingespannt ist und auf die Enden des Schneidwerkzeuges Ultraschallwandler einwirken, dadurch gekennzeichnet, daß
dem Bügel (3) ein Längsantrieb zugeordnet ist und dem zwischen dem Bügel (3) vorgesehenen Messer (5) zusätzlich eine mechanische, oszillierende Bewegung zugeführt wird, wobei die beidseitig quer zur Schneide eingeleiteten Ultraschallanregungen in dem Messer (5) Schwingungen erzeugen, deren Wellenlänge wesentlich geringer ist als die Wellenlänge der anregenden Ultraschallschwingung, weiterhin sind den Ultraschallwandlern (1) zwei, mit einem Bund (14) versehene Amplitudenverstärker (11) zugeordnet.

2. Ultraschallerregtes Schneidsystem nach Anspruch 1, dadurch gekennzeichnet, daß
die das Messer (5) aufnehmenden Amplitudenverstärker (11) in ihrer geometrischen Form dem Messer (5) angepaßt sind.

3. Ultraschallerregtes Schneidsystem nach Anspruch 1 und 2, dadurch gekennzeichnet, daß
das eingesetzte Messer (5) eine bevorzugte Länge von 300 bis 500 mm aufweist, mit einer Schneide (15) oder zwei Schneiden (15;16) versehen ist und das Messer (5) in seiner Axialrichtung in Vibration versetzt wird, wobei die Frequenzen innerhalb des Bereiches von 5 Hz bis 500 Hz und die Amplituden innerhalb des Bereiches von 10 bis 30 mm liegen.
